(19) Europäisches Patentamt

European Patent Office

Office européen des brevets

(11) **EP 0 809 191 B1**

(12) **EUROPEAN PATENT SPECIFICATION**

(45) Date of publication and mention
of the grant of the patent:
**28.04.1999 Bulletin 1999/17**

(51) Int Cl.$^6$: **G06F 15/18**

(21) Application number: **96106293.2**

(22) Date of filing: **22.04.1996**

(54) **Method and apparatus for representing self-identity of a referent-entity**

Verfahren und Einrichtung zur Darstellung des Geisteszustandes einer Bezugsperson oder -gruppe

Méthode et dispositif pour la représentation d'etat d'esprit d' une personne ou groupe de référence

(84) Designated Contracting States:
**AT BE CH DE DK ES FI FR GB GR IE IT LI LU MC NL PT SE**

(43) Date of publication of application:
**26.11.1997 Bulletin 1997/48**

(73) Proprietor: **Makhlouf-Norris, Fawzeya Ph.D.
London NW5 1ES (GB)**

(72) Inventor: **Makhlouf-Norris, Fawzeya Ph.D.
London NW5 1ES (GB)**

(56) References cited:
**US-A- 5 255 244**

- **IEEE TRANSACTIONS ON SYSTEMS, MAN AND CYBERNETICS, JULY-AUG. 1988, USA, vol. 18, no. 4, ISSN 0018-9472, pages 522-531, XP002006861 ROTHSTEIN J: "Bus automata, brains, and mental models"**
- **IEEE TRANSACTIONS ON CIRCUITS AND SYSTEMS, vol. 36, no. 6, June 1989, pages 846-856, XP000038465 MARKS R J ET AL: "ALTERNATING PROJECTION NEURAL NETWORKS"**
- **MINDS AND MACHINES, MAY 1995, NETHERLANDS, vol. 5, no. 2, ISSN 0924-6495, pages 161-185, XP000574417 LLOYD D: "Consciousness: a connectionist manifesto"**

**Description**

TECHNICAL FIELD

This invention advances a Virtual Model of Self-Representation for the construction of a thinking machine. It defines Self-identity and renders specific knowledge about a person's existence in reality. It is generated by 3-dimensional computer imagery. The database is a memory bank (existing knowledge) which is updated occasionally by the referent-subject and fed with new information as appropriate and accessed as required. It is obtained by analysing the mind constitutive elements' positions in the symbol space.

We use:

(a) The term 'Satellite' to signify a man/woman made structural-unit that stands for one human being, and acts as an attendant, a follower or a companion to anything that is being perceived (the Oxford Dictionary).

(b) The term 'Virtual Model of Self-representation' to mean the creation and transformation of data to generate a structural-unit that transmits a string of composite images corresponding to its referent-source and having spatial coordinates relative to its maker and user- this particular individual.

(c) The term 'Reality' to signify the existence of an objective reality outside the referent-subject mind. In this context, the assumption of an objective reality is equivalent to the assumption that: in principle, it is possible to determine whether a given statement about reality is true or false, objectively.

(d) The term 'Database' refers to the terms used in conceptualization (elements and properties) and the formation of propositions.

(e) The term 'Image' to signify the data structure containing the representation of an entity (e.g. a living human being, an organization etc...).

This model assumes that human existence in the physical environment sets in motion two contingent sets of observations. At any given point in time, these are the self-selected samples of human-events (occurrences) that are repeatedly perceived, apprehended and processed by analytical computation. The first set of observations is concerned with the referent-subject (source)- he/she is posited outside there amongst others of the same kind to constitute a life-force (a symbiosis e.g., an association where one lives within the other), consisting of an on-going-sequence-of-events that are instantly received (sense-datum) and transmitted by the sense organs (by analog), to be apprehended and reflected upon cognitively (by digital means). Its referent-source is unique and determinate- this particular individual who constructs a mental frame of reference by abstraction and comparative judgment. The second set refers to any other observed entity/event which is the subject-matter of cognitive representation. The source is variable. It comprises a multitude ranging from the simple to the complex and is indeterminable- an infinite number of objects/individuals/entities/generating recurrent events.

BACKGROUND INFORMATION

Across centuries up to the present time, the widely acknowleged pronouncements enunciated by research workers in the fields of applied human knowledge (Epistemology, Psychology, Artificial Intelligence, Associative Memory, Psychiatry, Education, Economics, Politics and International Relations, etc...) affirm that the human mind perceives what is recorded and transmitted by the sense-organs (sense-datum), that it assesses the input received to conceive it and to transform it into a message for communication and action. These statements imply that the human mind recognizes the relation that binds it to itself, that it has direct access to it and apprehends it. The Law of Identity is a basic principle underlying the certainty of feelings derived from self-evidence. In Logic: "Identity is the relation of a term to itself- 'A is A'". To establish this relation is to recognize that one is the same person that is identical with him/her Self. Hence, the Relation of Identity in diversity constitutes the primary relation in Self-representation on which are founded all others that are generated by abstract thinking. But, if given a real person who is equiped with a mental frame-of-reference (reference knowledge), then, how does the mind function to structure the representation of Self-Identity?

Numerous models which can be traced back many centuries, have been advanced by writers who used analogies drawn from mechanical devices- firstly, they imagined that the nerves transmitted signals by minute mechanical motions, and when the automatic telephone was introduced, the analogy of a telephone exchange was used to design the schematic flow of sensory and motor data. Currently, the prevaling model is that of a thinking machine- the electronic computer.

on Neumann's classical model architecture consists of three parts: a central processing unit (CPU), a memory, and a connecting device that can transmit data between the two (interface). It allows the instructions to be stored in the same memory as data. Neumann made no distinction between memory cells- the instructions are indistinguishable from data and both are manipulated in the same way. The interpretation of a word in memory only depends on the state of the machine at the moment the word is fetched from memory. Meaning is not an inherent part of the data, it depends only on the program logic. There is nothing that differentiates a word representing an integer from a word representing a character string. Hence, the Von Neumann model does not differentiate between memory cells. This aspect met with strong criticism and is labelled "The Semantic Gap". (5)

Von Neumann examined the notion of complexity and its ramifications for information processing systems and the relation of self-reproducing in natural organisms. He worked with the mature adult and recognized that the nervous system did not have the same logical structure as he assumed of automata in his studies. The nervous system transmits information by analog as well as by the digital means, whereas he assumed only digital transmission. He was concerned with the problem of complexity which presented him with a paradox: "There are two states of mind, in each of which one can put himself in a minute, and in each of which we feel that a certain statement is obvious. But each of these two statements is the opposite or negation of the other".

He realized that a system with the property called circle-free by W.S. McCulloch and W. Pitts, at which no pulse could ever return to a neuron through which it had once passed is a simplistic system. He dropped the assumption of no circles in the network, and assumed that in complex systems: "... the output of the machine at any time may depend on the state of the inputs in the indefinitely remote past. For example, the simplest kind of cyclic circuit .... is a kind of a memory machine. Once this organ has been stimulated by a, it remains stimulated and sends forth a pulse in b at all times thereafter. .... The use of cycles or feedback in automata extends the logic of constructable machines to a large proportion of intuitionistic logic. (6) (7)

To account for the transformation of Self-observations that are expressed in ordinary language and encoded in memory, the schematic designs founded on constructive/ intuitionist logics that have been advanced, are based on the "black box " model. It has been pointed out by A.M. Turing (1937), W.S. McCulloch & W. Pitts (1942) that effectively constructive/intiutionist logics can best be studied in terms of automata- "... The logical propositions can be represented as electric networks or (idealized) nervous systems. Whereas logical propositions are built up by basic components, such as relays in electrical circuits and neurons in the nervous system. A logical proposition is then represented by a "black box" which has a finite number of inputs (wires or nerve bundles) and a finite number of outputs. The operation performed by the box is determined by the rules defining which inputs, when stimulated, cause responses in which inputs, just as a propositional function is determined by its values for all possible assignments of values to its variables... ". However, while employing the "black box model" schemata, Neumann acknowledged that: ".... the whole logical pattern of the nervous system seems to deviate in certain important traits qualitatively and significantly from our ordinary mathematical and mathematical-logical modes of operation: The pulse-trains that carry "quantitative" messages along the nerve fibres do not seem to be coded digital expressions (like a binary or a (Morse or binary coded) decimal digitization) of a number, but rather "analog" expressions of one, by way of their pulse-density, or something similar-although much more than ordinary care should be exercised in passing judgments in this field, where we have so little factual information. Also, the "logical depth" of our neural operations- i.e, the total number of basic operations from (sensory) input to (memory) storage or (motor) output seems to be much less than it would be in any artificial automation (e.g., a computing machine) dealing with problems of anywhere nearly comparable complexity. Thus deep differences in the basic organizational principles are probably present ....". (8)

In the late 1970's Daniel Hillis became interested in how commonsense reasoning might be simulated by computers. Inspired by the work of Marvin L. Minsky of M.I.T. and Scott E. Fahlman of Carnegie-Mellon University, he thought that one way out of the morass sequential computers found themselves in when making everyday simple deductioins was to build a machine that could examine possible connections among concepts more than one at a time. By 1985, he proceeded to construct the Connection Machine. Investigators of artificial intelligence are making use of it to solve commonsense reasoning problems. Since then, there are about a dozen connection machines operating in four general areas: image processing, simulation of physical processes, searching of data bases and artificial intelligence.

Since the early 1970's, with the evolution of computer aided design (CAD) the promise of true three-dimensional (3-D) computer model representation has been the key to advanced manufacturing technology. Jonathan David Waldern' Invention (UK Patent Application GB 2 201 069 A, 1988) embodied in "Virtual Reality Machines-: "... Three dimensional display apparatus comprising computer means for generating and displaying an image of a virtual model having spatial coordinates, and means for enabling a user to interact with the model by supplying to the computer means data relating to movement of the user's eyes, the computer means modifying the image displayed in accordance with said data wherein said spatial coordinates are at least partly coincident with a known real 3-dimensional space in which said user is located, and including means for modifying the image displayed by the user in accordance with the position of the user within said space References to the user's position in space... may mean either his actual, physical one or a hypothetical one which the computer has been instructed by the user to "believe in" through the use of suitable controls...........The user will have the experience of entering a computer-generated environment and will be able to move in it (actually or apparently) and interact with it.... ".

Waldern's invention has revolutionised the entertainment industry (video games) by creating an artificial environment inside a computer's memory which looks and feels as if it actually exists. It is a fictitious world created by a computer, a graphic card, specially written software and some kind of control device with which to steer a course through the computer-generated environment which blurs and confuses the boundaries between fact and fiction.

The proposed invention enables the user of a virtual machine to generate a self-made human environment that is believed to be true, and is based on acts of conception, and is expressed in ordinary language (logical propositions). The order that structure its elements in the memory field locates the user, the reference source, in a 3-dimensional mind space. Having access to this space, he/she will be able to step inside it to take a closer look at auto-transmitted Self-Images that are grounded and reproduced in memory.

SUMMARY OF THE INVENTION

The present invention is set out in claims 1 and 5.

(1) The model's hall mark is the making-of-judgements based on the Predicate Calculus (PC) with Identity. (1) The predicate letter (E) means "the same as". By generating this relation to refer to one's Self in continuity with time, the order, that emerges to make sense out of these changing relations, forms its structure. (2)

Given the assumption that this structured-form is exclusively characterised by continuity in time and contiguity with this person, in the sense that, no other form generated by the same person is similar to it in this respect, it follows that it is the only form of its kind that is grounded in memory cells. This premiss implies that the structured figure adhering to this person "the Self" stands in a non-parallel relation to any other figure formed to represent another person or entity that is encoded in memory.

The sense-organs transmit data for encodement in memory cells that call for processing in terms of the following principle- the dual transmission of input signals. The sense organs transmit two synchronous signals (true or false) that are input simultaneously for encodement in a memory address. To encode two bits, four memory cells are required providing the capacity to input one out of four possible different signal states: one signal state would represent OO, another 01, another 10, another 11. Only one out of these is to encode the input by one binary value (1) true or (0) false in a memory cell. This principle is of extreme significance as it implies that at the initial stage of sense organs' transmission, the sense-datum received is transformed operationally by a Boolean function whose output values constitute the initial input encoding the data base in a memory store.

(2) The model is a computational system designed as a field of progression constituted by an individual's states of being (mathematical points) that are compared and derived from other states. Its smallest unit of analysis is a couple. Its input is derived from a given individual's acts of conception that are expressed in ordinary language, a finite number of propositions. Its output is determined by the order that structures the memory field in which Self-representation is grounded and reproduced. It is constructed by Boolean and geometric methods. (3) (4)

In this context, the basic unit of analysis is a couple (ABC,D1). The pair members are: (1) The referent-subject represented by three types of data- three temporal modes (ABC) at the conceptual level, three elements in Boolean Logic (E3 E5 E4), three points (ABC) in Geometry. Therefore, Element 3 is the same as Point A and temporal mode A (Here and Now). Element 5 is the same as Point B and temporal mode B (Before Now). Element 4 is the same as Point C and temporal mode C (After Now). (2) A known person represented by Element D1 at the conceptual level and in Boolean Logic, Point D1 in Geometry.

THE DUAL CONSTRUCTION OF THE MODEL.

The Geometric Construction: the representation of the basic unit of analysis (ABC, D1) is generated by abstraction. The positing of the referent-subject in contra-positional directions, at three non-colinear points (A,B,C) in a symbolic space generated by the subject provides the means by which the triangular Self -Planar-Base (SPB) is formed. By referencing (grounding) Self-representation into the Cartesian World-Coordinate-System, the location of a fourth point (D1) is arrived at by computing the distance that separates its position from that of the Self-Planar-Base. The combinatory analysis of these four points generates a four-sided figure, a tetrahoid- the model's building block. Alternatively, if the referent-subject's acts of conception generate three co-linear points, then, Self-representation is structured unidimensionally along one line (vector).

The Boolean Construction of the basic unit of analysis (ABC,D1) generates a Composite of Self-Images that represent the referent-subject, in terms of a snapshot record taken in the here and now. Each building block is constructed by Boolean means. The images transmitted by (SPB) code are combined with those that are defined by a point's code located at the common apex of each successive figure (D1...D17).

The Self-Planar-Base' Images change by a movement in backward and forward directions across the (SPB) from: Point (A) at the here and now to that of (B) and (C) before and after now respectively. These images are combined with the Images that stem from the structural links that connect the (SPB) with the paired element (D1) located at the common apex, in separate and successive building blocks, to form by logical assembly the layers of the Self-Identity-Unit encoded in memory.

The decipherement of this code displays the Self_Images that are transmitted by each block to the referent-subject across (N) directions yielding auto-meaningful messages to perceive. This code defines the referent-subject's states of mind.

The dual construction of the model prescribes the means by which to construct the memory of a machine, an image generator, named "The Mind Positioning-Satellite".

An embodiment of the invention will now be described by way of an example only, with reference to the accompanying diagramatic drawings in which:

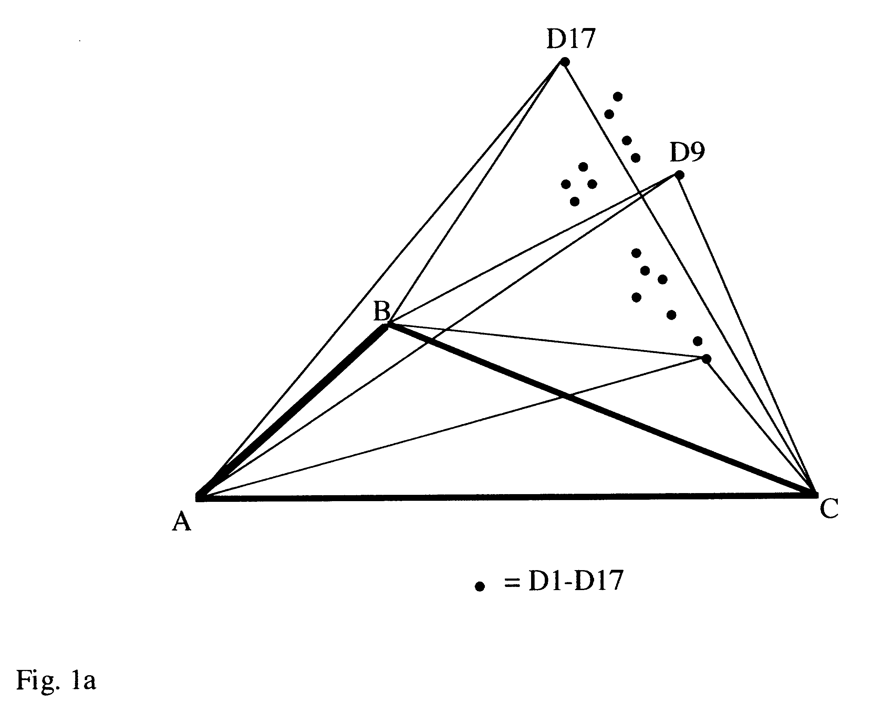

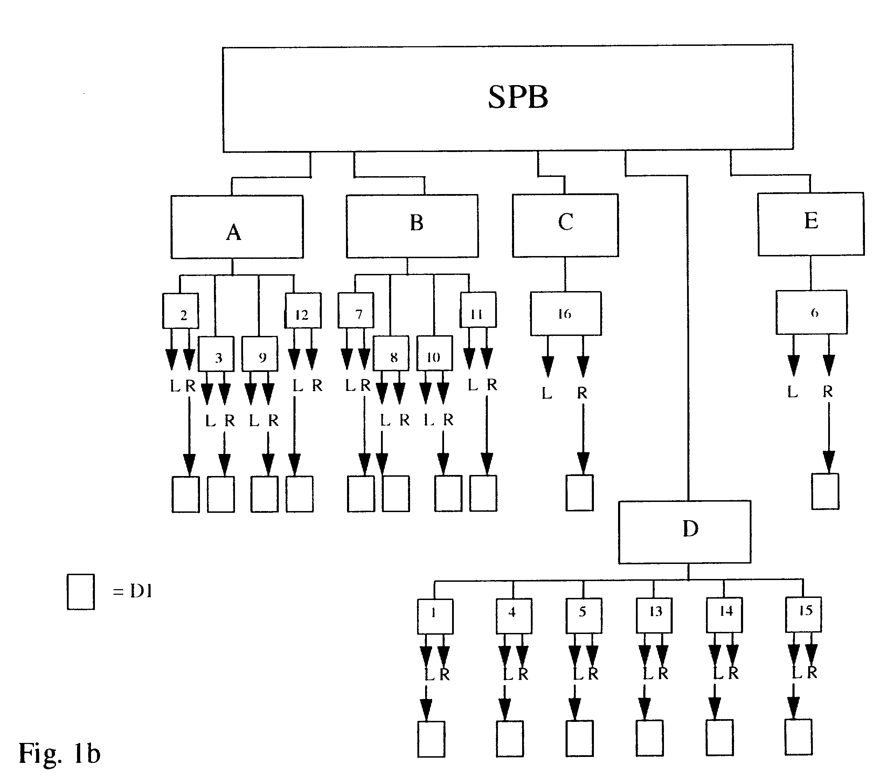

Fig. 1A and 1B, as claimed in Claim 1, are schematic illustrations of the basic configuration of the model in accordance with the present invention. Fig. 1A shows the geometry of the basic configuration. The Triangular-Self-Planar-Base is denoted by (ABC) and is connected with (D1) forming the figure of a tetrahoid. Fig. 1B, is an overall description of the model's building block. It shows the elements (E3,E5,E4) and (D1). These elements are represented in terms of their associated properties and bi-directionality.

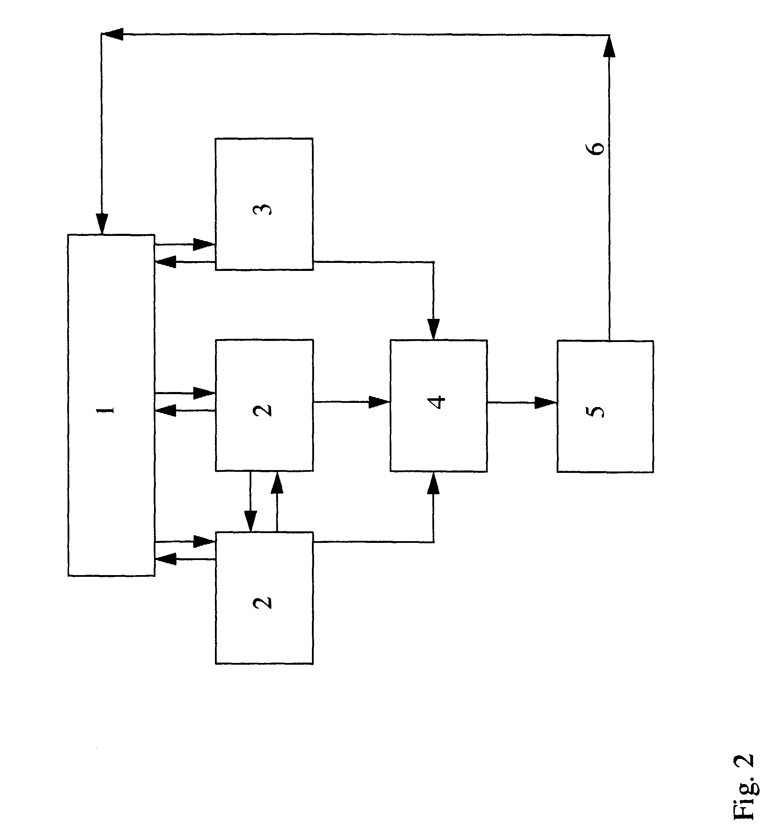

Fig. 2 is a block diagram illustrating the nature of the data, and the manner it is structured to model the existing relations between the elements encoded in memory. The subject is an information processor operating internal devices for inputting the sense-datum, analysing, synthesising, and storing the output-signals in a memory bank governed by a cyclic feedback system. In Fig. 2, (1) refers to the overall existing knowledge accumulated by repeated perceptions and derived from a multitude of sources in the past; (2) refers to the subject's prior knowledge of itself and the object (known element); (3) refers to the datum perceived in the here and now; (4) refers to the processes of abstraction and comparative judgement (5) refers to the processes of analysis and synthesis; (6) refers to the cyclic feedback-circuit that creates a kind of a memory machine that sends a pulse thereafter that generates an active state of mind.

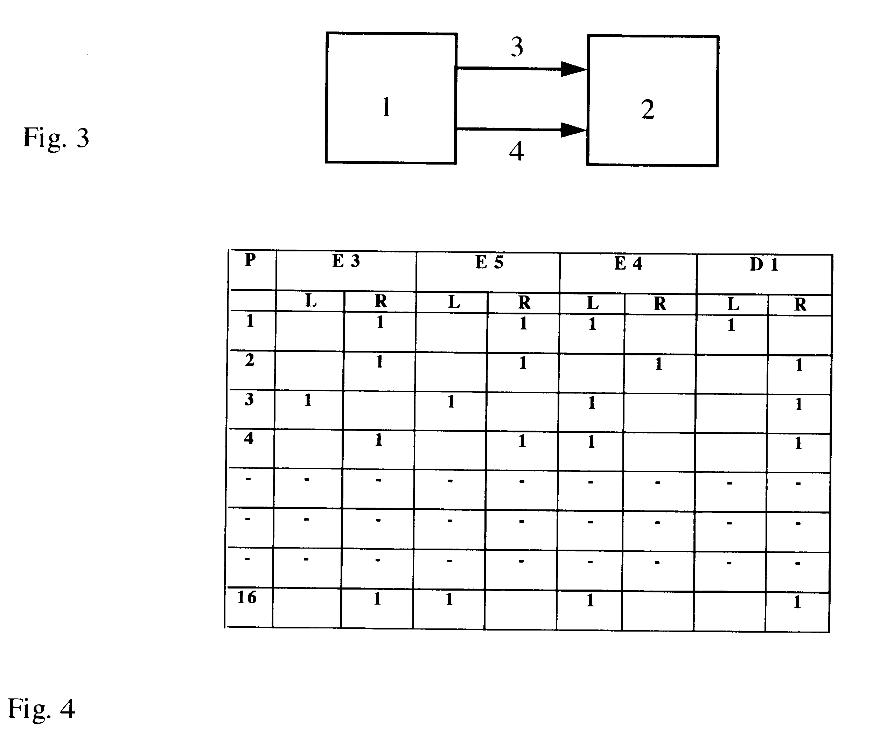

Fig. 3, is the simplified representation of one building block. (1) refers to the referent-subject's perception of an occurrence. (2) refers to the object, a known element. (3) & (4) refer to two pathways for the transmission of two simultaneous activities, the overall existing knowledge and current observations.

Fig.4, illustrates a tabular representation of the pattern of input signals assigned to elements (E3,E5,E4) and (D1). The three arrays (E3,E5,E4) represent the referent-subject, the array D1 represents a known element selected from either a high or a low frequency sampling of a recurrent occurrence (observations) in contexts that place the referent-subject, face to face, with a known element. The presence of value 1 as an input signifies that the assertion made is true either for the left or the right direction.

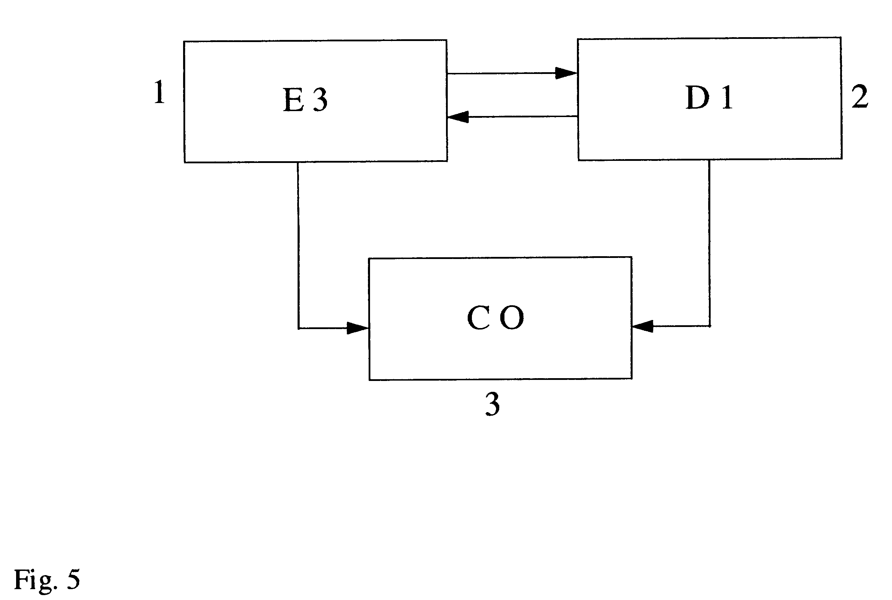

Fig 5, shows the terms comprised in a snapshot record of current observations. (1) refers to the subject' data (E3); (2) to the object, known element (D1); (3) to the current observations (CO).

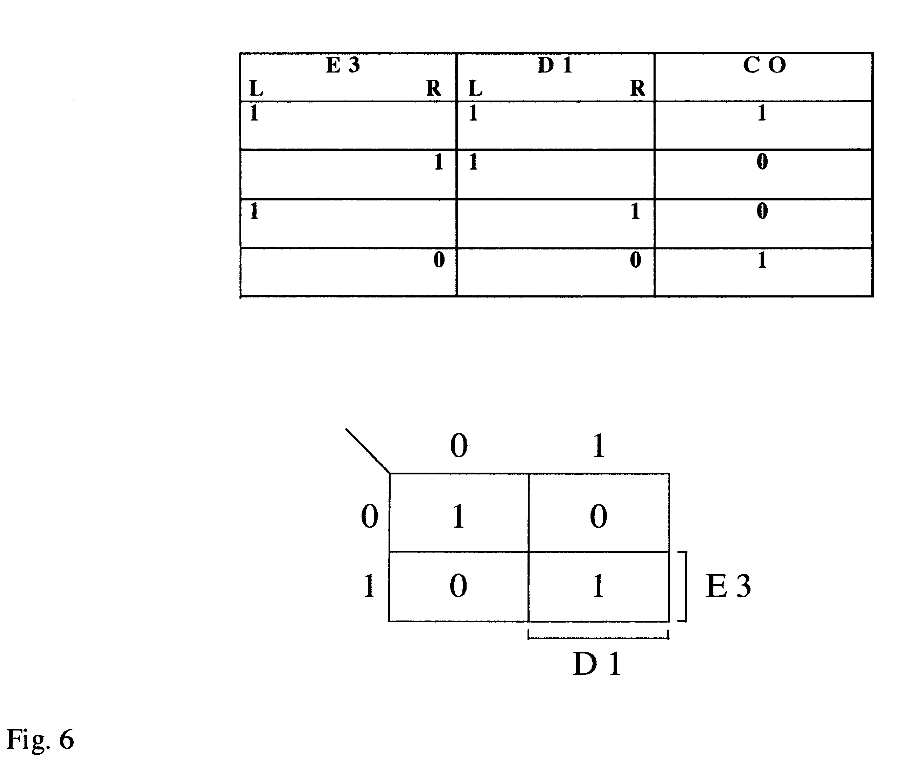

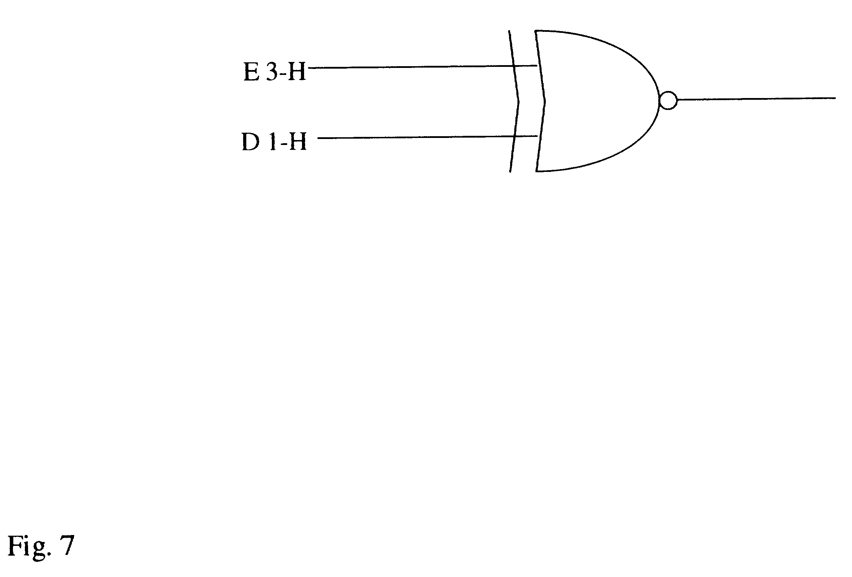

Fig. 6, illustrates a standard truth table denoting the Exclusive-Nor Operation. It is a tabular representation of binary inputs and their corresponding outputs. E3 and D1 are the two binary inputs which result in a total of four possible output combinations represented by CO. The adjacent diagram represents a Karnaugh map of this truth table. A karnaugh map is a pictorial representation of this truth table which is normally used in digital electronics to minimize Boolean equations. Upon observation, a single logic gate known as the Exclusive Nor Function is found to represent the logic operation required by the subject, E3, and the variable describing the object, D1. The output of this Exclusive-Nor gate is termed current observation (CO) as shown in Fig. 7. Figure 7, represents the combinational logic symbol of this Exclusive-Nor function to be used in the construction of the circuitry (9). Both types of assertion levels and inverting gates are used to enhance speed and reduce circuit complexity at transistor level and minimise power dissipation. Positive logic is used to denote the left direction, i.e., when a variable is asserted high then it is true indicating a left direction, and negative logic is used to denote the right direction, i.e., when a variable is asserted low then it is true indicating a right direction, as shown in Fig. 7.

E3-H is true for left direction
E3-L is true for right direction
/E3-H = E3-L

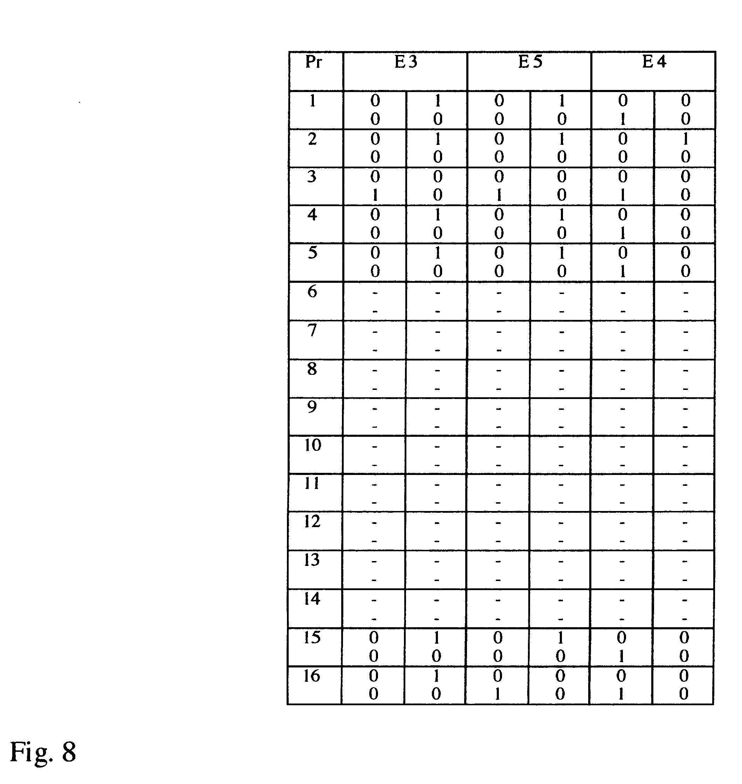

Fig. 8, is a tabular representation linking the three elements with their respective properties and bi-directionality. The bits assigned to elements (E3,E5,E4) are input in a memory store comprising 192 cells (3x4x16).

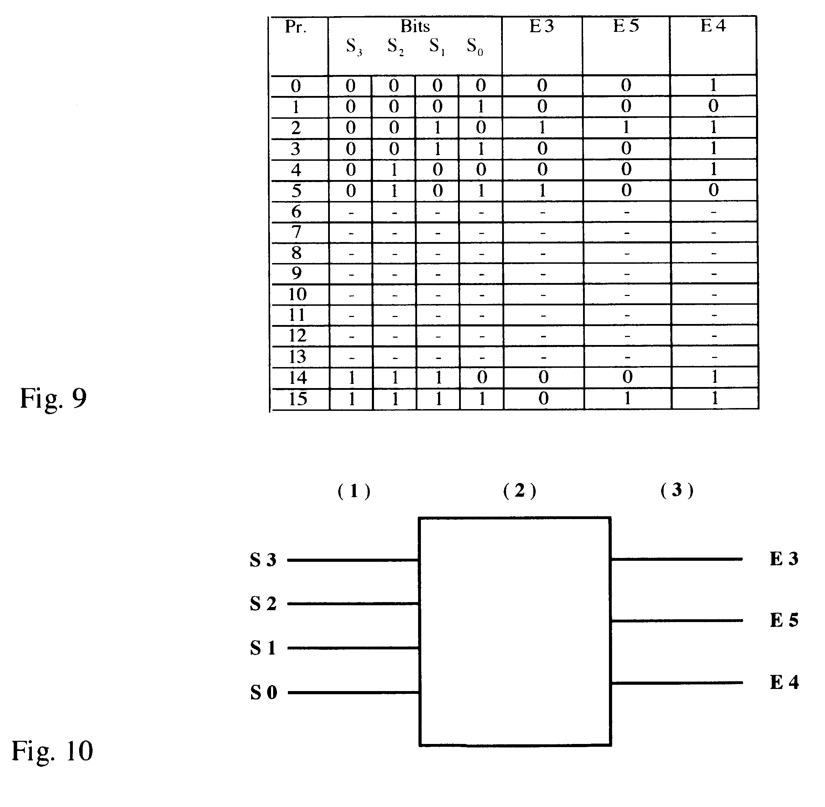

Fig. 9 represents the decimal properties (S3 S2 S1 S0). The propositional variables E3, E5 & E4 are assigned the value true for the right or the left direction.

Fig. 10, is a block diagram representing the logical relationships defining the linkage between the input variables (S3,S2,S1,S0) and the three input elements. (1) refers to the input properties, (2) defines the digital circuitry which consists of combinational logic gates and (3) represents the three output elements. The dual element generates the inverse of the elements and vice versa. If function E3 is true for a left direction then it is false for a right direction. The logical relationships defining the linkage between these input variables (S3 S2 S1 S0) and the three input elements are translated into Karnaugh Maps in order to obtain minimised Boolean expressions. These Boolean equations are given below:

$$E3 = S3./S2 + S3.S1./S0 + S3.S2.S0 + S3.S1.S0 \tag{1}$$

$$E5 = S3./S2 + /S3.S1./S0 + S2.S1.S0 \tag{2}$$

$$E4 = /S1./S0 + S3.S2 + /S3./S2.S1 + S3.S1.S0 \tag{3}$$

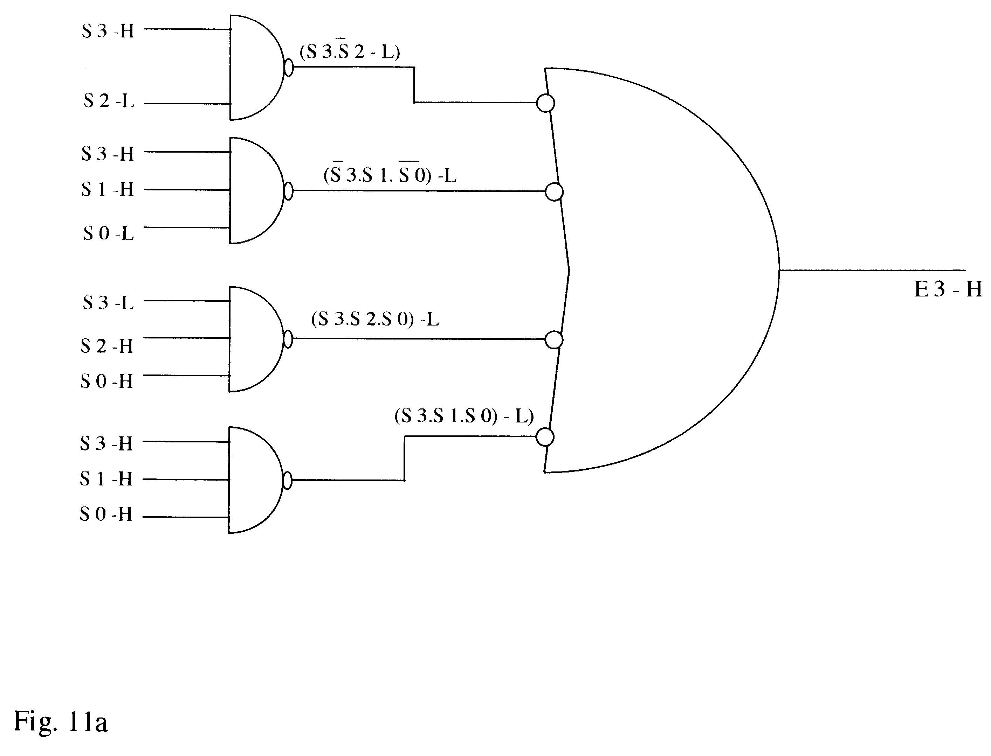

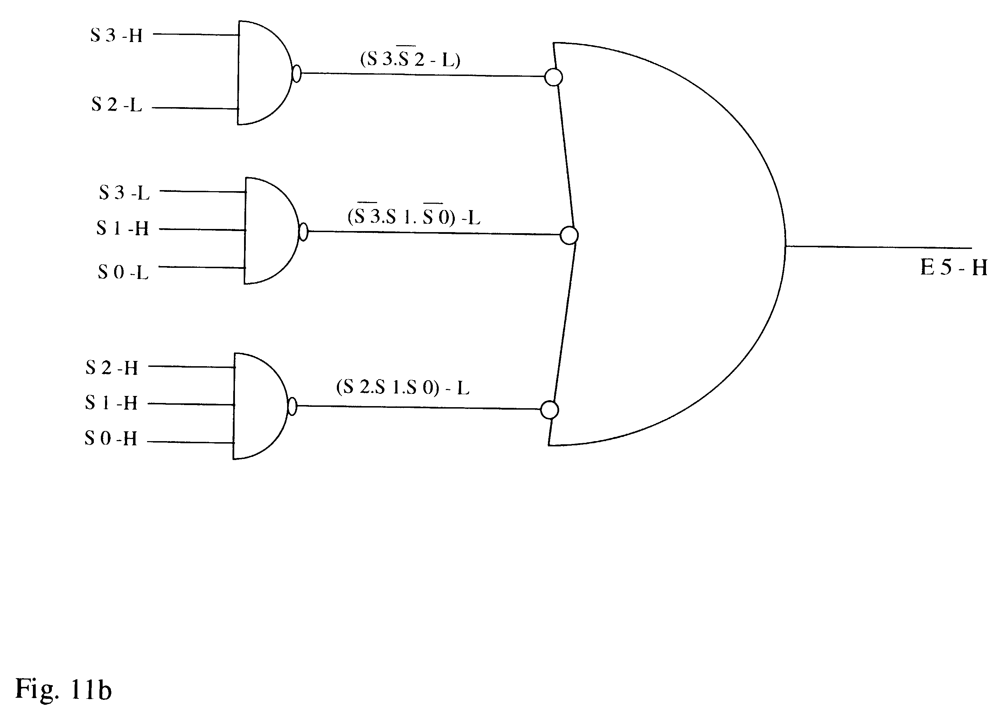

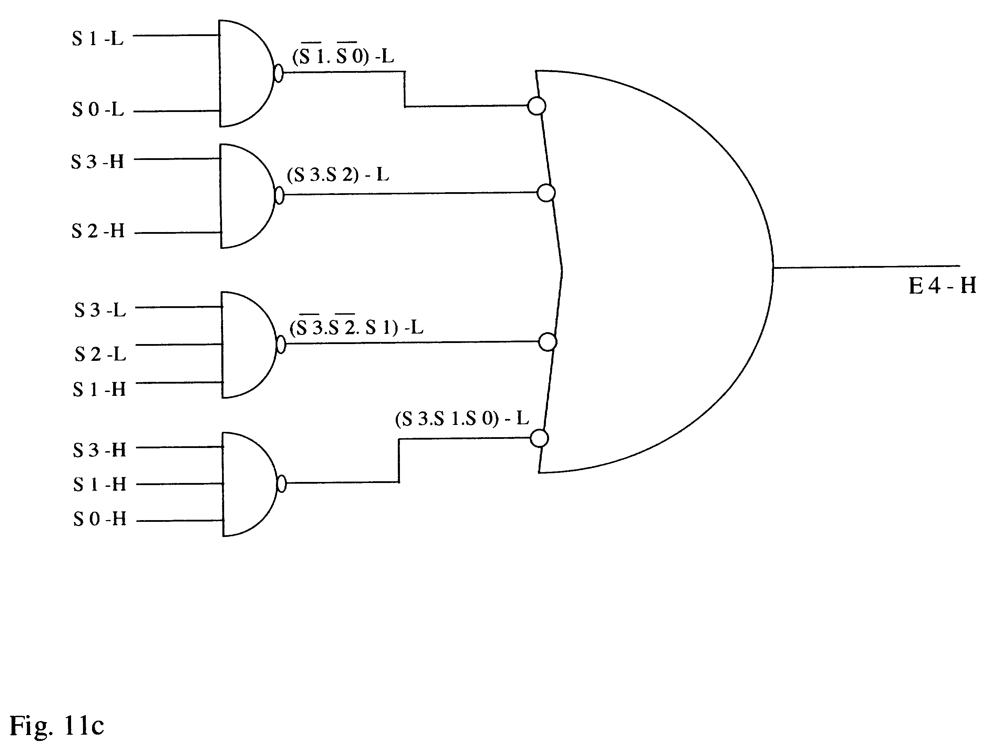

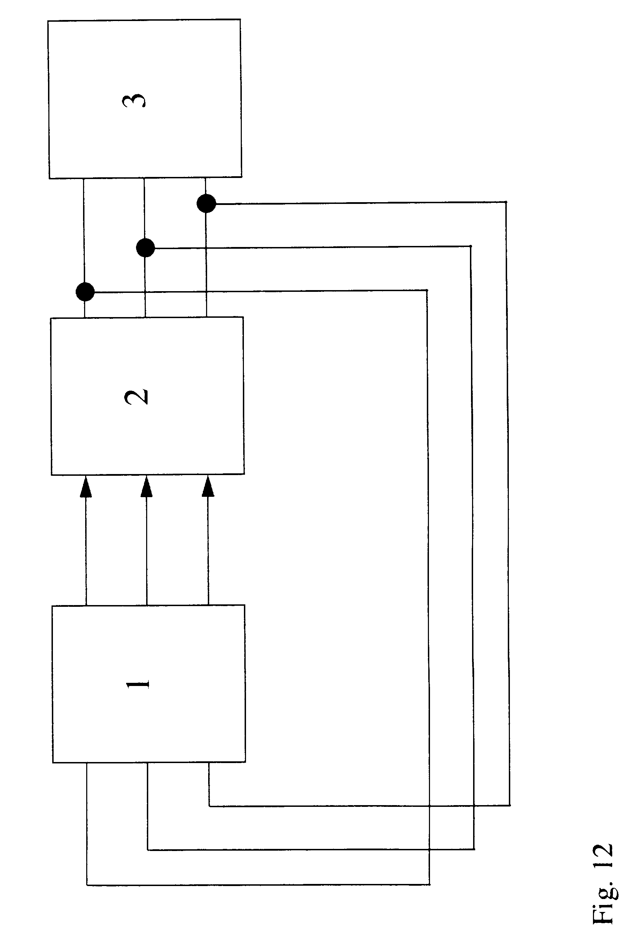

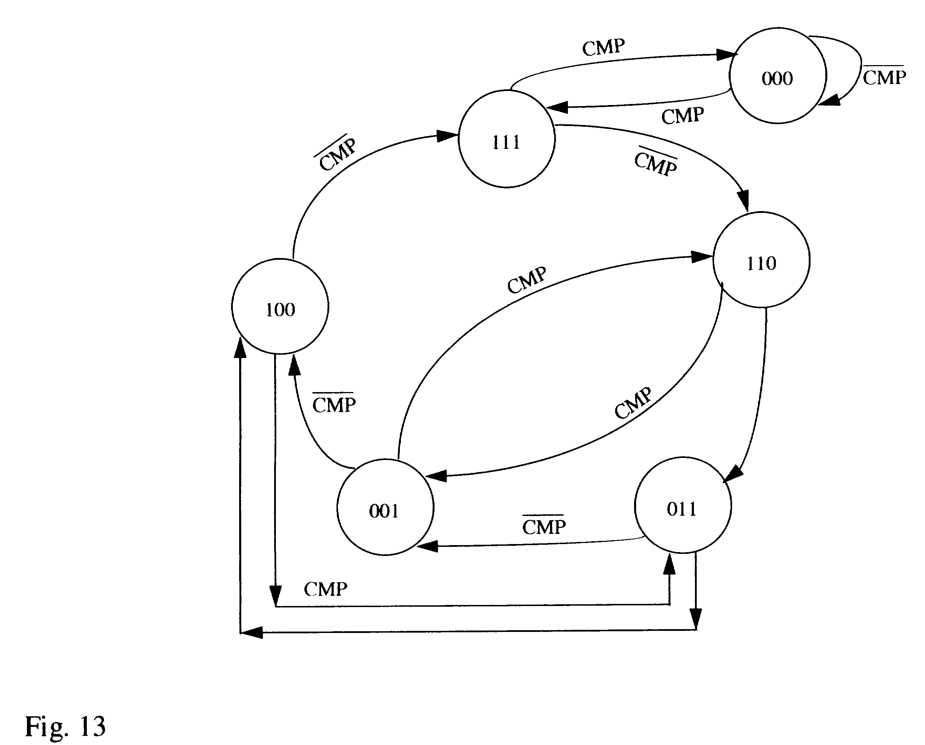

Figures 11 a, 11b, 11c, represent the combinational logic for the three elements (E3,E5,E4) stated in Figure 10. The relationship between the input elements E3, E5, E4, and the fourth input CMP with the next state encoder variables N2, N1 and N0 is modelled by a Finite-State-Machine (FSM). A simplified block diagram representation of this model is shown in Fig. 12 where (1) refers to the next state encoder; (2) to the memory storage elements which are essentially D-type flip-flops; and (3) refers to the output decoder. The (FSM) machine is designed from first principles using the state diagram shown in Fig. 13. It defines and links the logical sequence of the various five states incorporating an external input variable CMP. This state diagram is then translated into variable entered Karnaugh Maps where the minimised Boolean expressions are extracted for the next stage encoder expressions N2, N1, and N0. These expressions are given below:

$$N2= E5.E4 + /E3.CMP + E3./E5./CMP + E3.E4./CMP \tag{4}$$

$$N1= E3./E5 + /E5.CMP + E3./CMP \tag{5}$$

$$N0= E3./E4 + E4.CMP + /E3.E5./CMP \tag{6}$$

The complement of State A is accounted for in the State Diagram (Fig. 13) by the 000 state.

Figure 13 is a state diagram defining and linking the logical sequence of the subsets comprised in the Self-Planar-triangular-base.

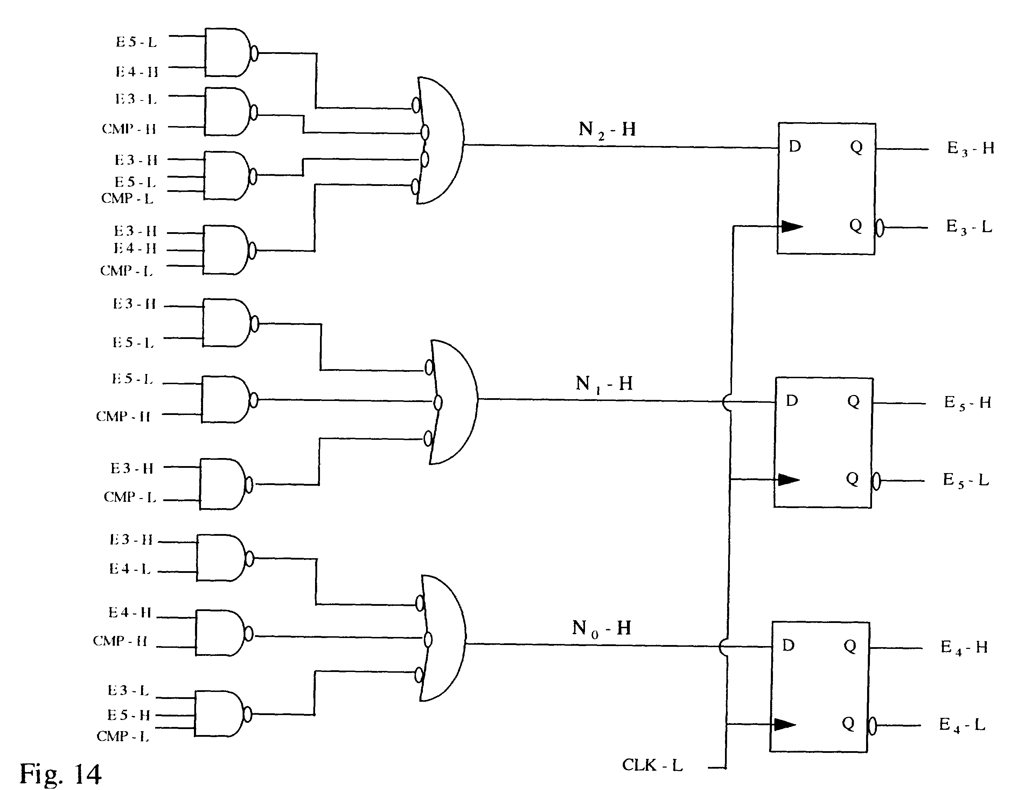

Figure 14, illustrates a detailed circuit of the finite-state-machine. The logic gates shown in the form of two input and three input NAND gates represent the combinational logic that control the interaction of the three elements (E3.E5,E4) and the complement input signal CMP. The outputs from these logic gates are directly fed to the relevant D-type flip-flops for storage purpose.

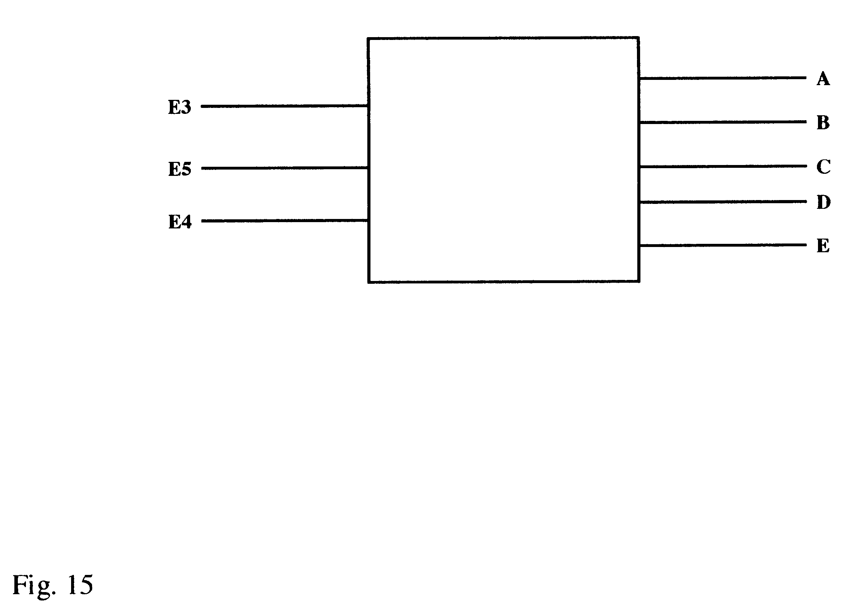

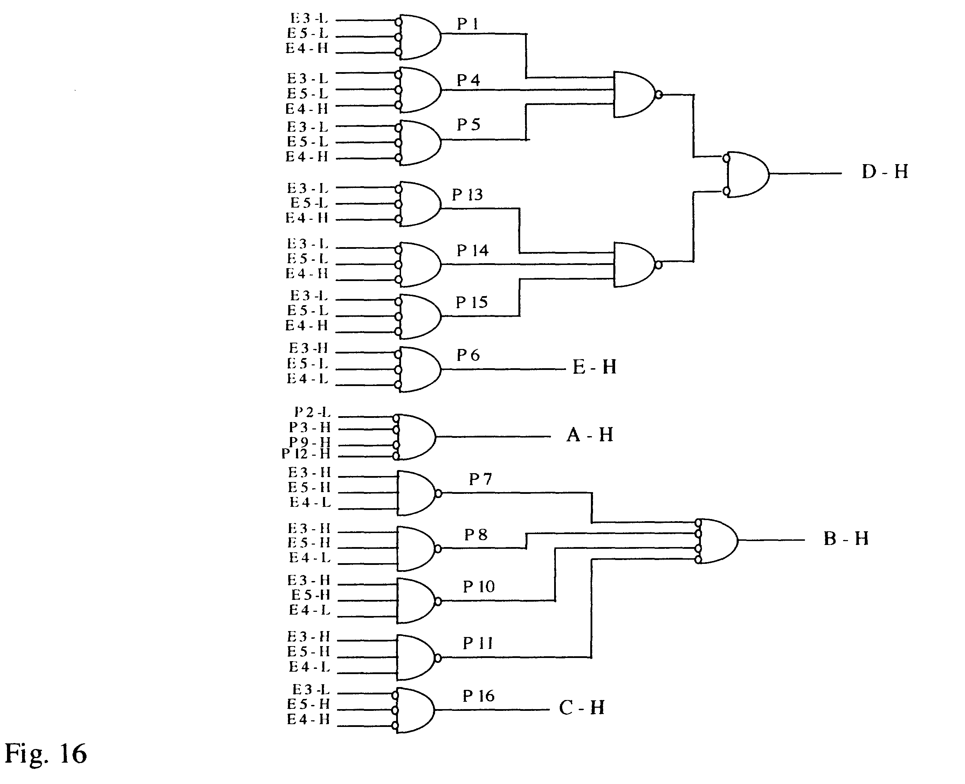

Fig.15 shows a block diagram of the Self-Planar-Triangular-Base. Fig. 16 is the detailed circuitry shown in Fig. 15, expressed in the form of logic gates. The inputs A,B,C,D,E are the five internal states which form the (SPB).

Fig. 17 shows the binary code of the subsets (ABCDE) comprised in the Self-Planar-Base (SPB). It represents a 16 bit word which is to be transmitted serially.

Fig. 18, shows the geometric representation of the model's building block (ABC,D1). It delineates the perimeter of an area of interconnected memory cells Neural Network' comprising a four-folded figure consisting of the triangular Self-Planar-Base (ABC) and the three faces that connect it with the common apex (D1).

Fig. 19, is a template employed to illustrate the fundamental nature of the design governed by duality and directionality. It is employed to illustrate two complementary stages of input/output relations:

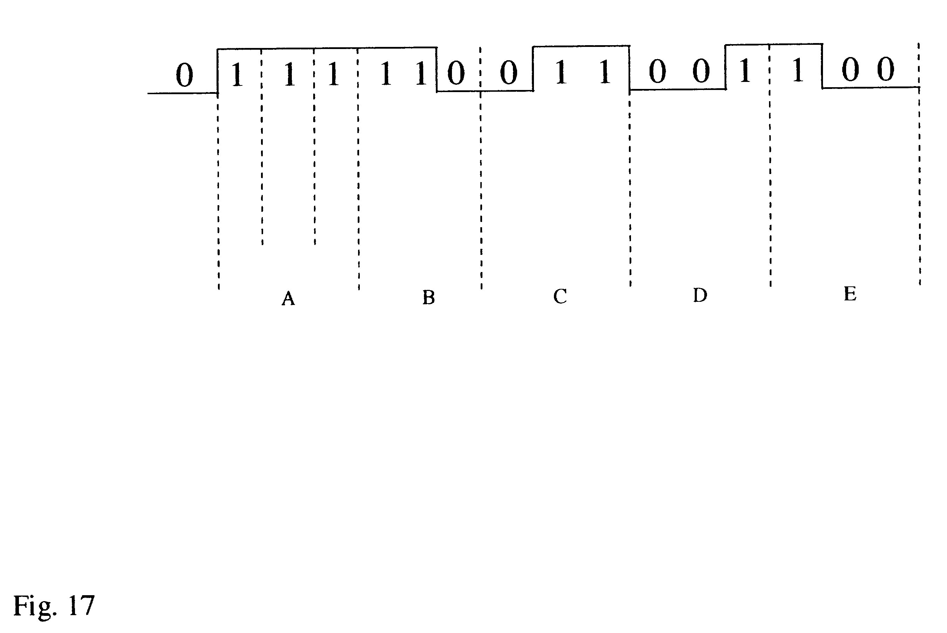

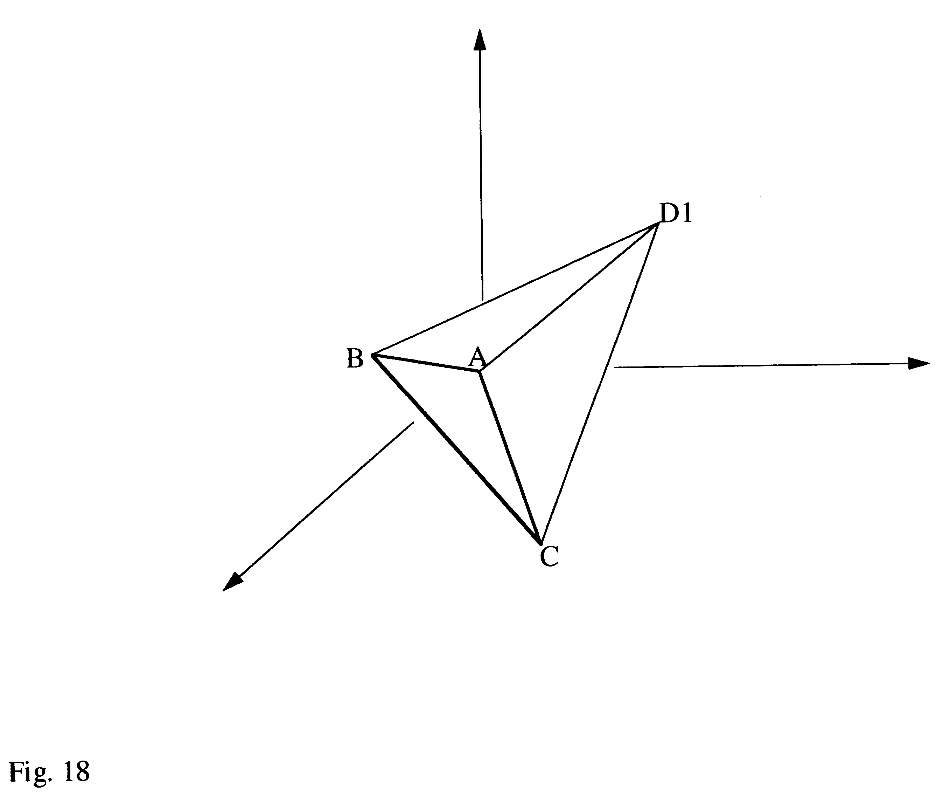

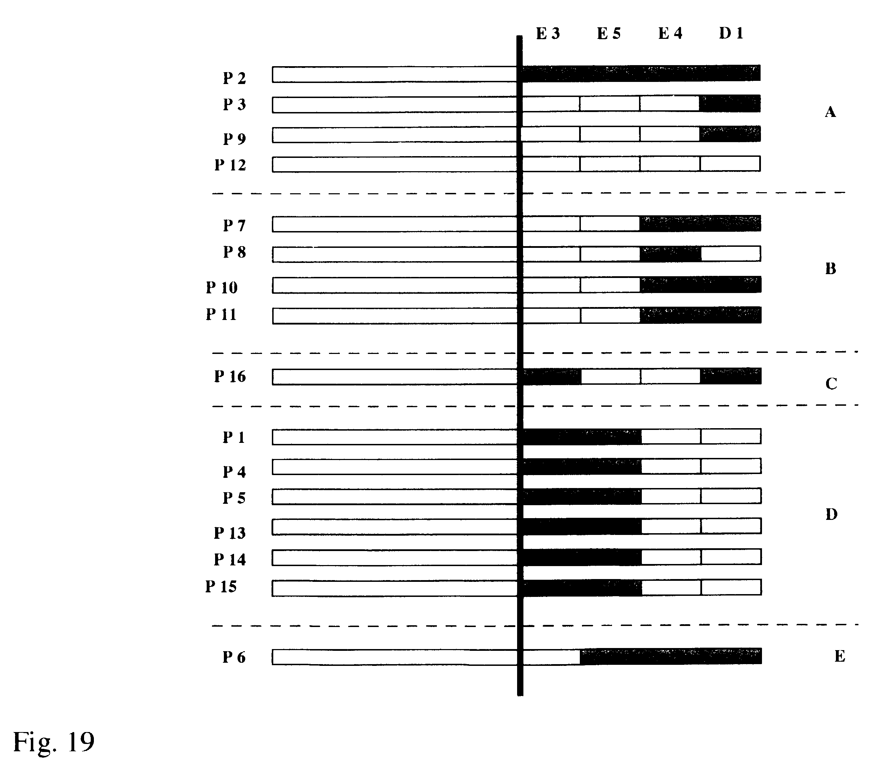

(1) to depict the binary code of one building block encoded in memory (SPB,D1). The (SPB) is a module representing the integration of the five states where the code is given in Fig. 17. The combined code (SPB,D1) integrating the Self-Planar-Base with DI's code is illustrated in Fig. 19. Its output signals are combined with the input signals encoding D1, in the same or opposite direction, across five dimensions. For instance, in the first dimension, State (A) located at the Centroid is assembled to connect its four output signals with (D 1)'s corresponding signals forming four joints. State (A)'s constituent term (P2) locates (E3E5E4) at the right direction, and prescribes the direction of linkage with (D1) in the same direction (right). While State (A)'s remaining constituent terms (P3, P9, P12) locate (E3 E5 E4) at the left direction, and prescribe the direction of linkage for (P12) in the same direction (left) and in the opposite direction (right) for (P3, P9), thus, generating two displacements in connectivity. In the second dimension, State (B) locate (E3E5) at the left direction and (E4) at the right direction (Surface comprising the vertices (A.AB.B). Its constituent terms (P7, 10, 11) prescribe the direction of linkage left for (E4) at the right direction (Surface comprising the vertices (A.AB.B.) Its constituent terms (P7, P10, P11) prescribe the direction of linkage (left) for (E4) and in the opposite direction (right) for (E3 E5); while its constituent term (P8) establishes the link in the same direction for (E3E5) and in the opposite direction for (E4), thus, generating three displacements for (E3E5) and one displacement for (E4). The remaining states (C,D,E) are constructed analogously. The assembly of (SPD, D1 to D17+) codes represent the whole structure of the Self-Identity-Unit grounded in memory.

(2) It is employed to illustrate the interface with the outside world. The resultant output obtained, in the form of strings of bits that represent the internal states, are translated by cross reference to their respective properties' labels. The restoration of this text explicates the messages (images) encoded and reproduced by memory. The output is made accessible for communication.

THE UTILITY OF THE MODEL

By locating the maker and user of the model in a three-dimensional mind space that is coincident with a known real three-dimensional space which is believed to be true, the method employed enables the user to generate a non-fictitious self-made world based on acts of conception that are believed to be 'true'. Having access to this space, he/she will be able to take a closer look at Self-representation, to perceive the auto-transmitted images that are grounded and reproduced in memory, and then step back either to produce a change by designing an appropriate fit (correspondence) between Self-Images and personal conduct to get what one wants or to reproduce the same Self-images by replication to reap the same outcomes as before. It posits the referent-subject, face to face with Self-Knowledge and an option to engineer change, that is, with the possibility of restructuring the order governing Self-conceptions by means of making predictions. If these are tested, against factual outcomes, by trial and error, it would be possible to ascertain whether the predictions are either concurrent or discordant with Self-made objectives. This exercise is conditional to the referent-subject desire for change, and the criterion of personal preferences that accounts for the cost incurred by loss and/or gain. With adaptation, the utility of the model proposed extends beyond the representation of one individual's system of states of progression in thinking to that of representing an entity that comprises a finite number of individuals but is counted as One: for instance, a commercial company, a political party, a state, or a military (regiment/army). In these contexts, the representation and definition of Identity is based on the acts of conception that assign values to an entity's elected membership relative to the formulation of its objectives. The proposed invention provides a model to utilize in the fields of applied human knowledge such as: (a) In education, to foster individuality, cultural integration and social cohesion. (b) In mental health, the prevention of behavioural disorders. (c) In management and personal selection, in particular, for jobs that incur high cost due to human errors. (d) In politics and international relations, in the resolution of conflict. (e) In leisure-films and computer games. (f) In advertising.

REFERENCES

(1) J.N. Crossley, (1979), "What Is Mathematical Logic", Oxford University Press.
(2) Bertrand Russell, (1901), "On the Notion of Order", Mind, Vol. X.

- Bertrand Russell, (1903), "On Order", Chapter XXV, "The Principles of Mathematics", 11th impression, 1985, Blackmore Press, Dorset, U.K.
- Bertrand Russell, (1919), "The Definition of Order", in "Introduction to Mathematical Philosophy".

(3) William Rowan Hamilton, (1835), "The Theory of Conjugate Functions Or Algebraic Couples- Comparison of Any Two Moments With Respect To Identity Or Diversity, Subsequence Or Precedence", and his "Lectures On Quarternions", Dublin, (1853).
(4) George Boole, (1854), "The Laws of Thought", first published (1958), Constable & Co., London.
(5) A.J. Van De Goor, (1989), "Computer Architecture & Design".
(6) J. Von Neumann, "The Computer and the Brain", Collected Works, edited by A.H. Taub, 1961-1963, New York.
(7) J. Von Neumann, "Theory and Organization of Complicated Automata", edited by A. Burks, 1949.
(8) J. Von Neumann, "Probabilistic Logics and the Synthesis of Reliable Organisms From Unreliable Components", in "Automata Studies", edited by C.E. Shanon & J. Mc Carthy, 1956, Princeton University Press.

## Claims

1. An electronic computer for processing and storing information concerning a referent entity and information concerning a plurality of other entities of the same kind as the referent entity as perceived by the latter, said information being supplied to the computer at input means thereof as separate digital inputs, the information concerning the referent entity (E3E5E4) representing perceptions of the referent entity of itself at three different points in time (ABC), the computer being adapted to process said inputs separately by Boolean and by geometric computations to combine a continuous stream of bits (E3,E5,E4) relating to said referent entity and an intermittent stream of bits (D1-D17) relating to said other entities, in the geometric computation said information concerning the referent entity being processed as a base triangle of vectors (ABC) in a three-dimensional coordinate space and said information concerning said other entities being processed as respective points (D1 - D17) having respective distances from the plane of said base triangle, the computer being adapted to construct from each said point (D1 - D17) and the same base triangle (ABC) a respective tetrahoid figure for display (Figs 1b & 18), and means for combining the continuous and intermittent streams and for providing the same to said input means whereby the computer functions continuously in a closed loop in a state which is unchanged until there is a change in an input.

2. A computer as claimed in Claim 1, characterised by the provision of means providing an interface with the world outside the computer, said interface providing a display of the current state of the computer (Figure 19) which changes only in response to a change in information supplied to the computer.

3. A computer as claimed in either preceding claim, characterised in that the digital inputs are subject predicate propositions of the referent entity represented as two-value descriptors the value of which are represented as a difference and as a distance between the continuous stream (E3,E5,E4) and the intermittent stream of bits (D1-D17).

4. A computer as claimed in any one of the preceding claims characterised by the provision of a finite state machine, a next-state encoder and a database, the finite state machine having a finite number of internal states and defined transitions between said states, the finite state machine being adapted to receive the combined outputs of the continuous and intermittent streams and to process the same sequentially or by parallel processing to output to the next-state encoder, the next-state encoder outputting both to said database and to said input means.

5. A method of processing and storing in a computer information concerning a referent entity and information concerning a plurality of other entities of the same kind as the referent entity as perceived by the latter to provide to a referent entity other than said computer a representation of self-identity, the method comprising converting into digital inputs to the computer as raw data subject predicate propositions of said referent entity concerning itself as perceived at three different points in time (ABC) and of said other entities of the same kind as the referent entity, encoding the raw data as a bi-polar representation, subjecting the bi-polar representation to Boolean combinational analysis and geometric analysis to combine a continuous stream of bits relating to said referent entity and an intermittent stream of bits relating to said other entities, in the geometric analysis the three points in time (ABC) being represented as a base triangle of vectors in a three dimensional coordinate space and the other entities (D1-D17) being represented by points having respective distances from said base triangle to provide respective tetrahedra having said base triangle in common (Fig. la), outputting the geometric analysis to provide structural analysis of the tetrahedra, outputting the Boolean and the geometric structural analyses to a database and to display means of the computer as a representation of the current internal-state-structure of the computer and outputting the database to the input means of the computer whereby the latter functions in a close loop, its internal state changing only in response to a changed input.

6. A method as claimed in claim 5 characterised in that a finite state machine and a next-state encoder are used to convert the combined Boolean and structural analyses into a next-state input to the database and input means.

## Patentansprüche

1. Elektronischer Computer zur Verarbeitung und Speicherung von Informationen über eine Bezugsperson und Informationen über eine Vielzahl von anderen Personen derselben Art wie die Bezugsperson, wie sie von der letzteren wahrgenommen wird, wobei besagte Informationen mittels seiner Eingabegeräte in den Computer als separater digitaler Input eingespeist werden, während die die Bezugsperson betreffenden Informationen (E3E5E4) die Selbstwahrnehmungen der Bezugsperson zu drei verschiedenen Zeitpunkten (ABC) repräsentieren, wobei der Computer darauf eingerichtet ist, besagte Eingaben separat durch Boolesche und geometrische Berechnungen zu verarbeiten, um so einen kontinuierlichen Bitstrom (E3, E4, E5), der sich auf besagte Bezugsperson bezieht, mit einem intermittierenden Bitstrom (D1-D17), der sich auf die besagten anderen Personen bezieht, zu kombinieren; dabei werden in der geometrischen Berechnung die besagten, die Bezugsperson betreffende Informationen als Basisdreieck von Vektoren (ABC) in einem dreidimensionalen Koordinatenraum verarbeitet, die die besagten anderen Personen betreffenden Informationen dagegen als Punkte (D1-D17) jeweils mit ihrem Abstand von der Ebene des besagten Basisdreiecks; weiterhin ist der Computer so eingerichtet, dass er aus jedem der besagten Punkte (D1-D17) zusammen mit dem Basisdreieck (ABC) jeweils ein Tetraeder zu Darstellungszwecken konstruiert (Fig. lb und 18, sowie Mittel zur Kombination der kontinuierlichen und intermittierenden Bitströme und zur Bereitstellung derselben an den besagten Eingabegeräten vorsieht, wobei der Computer beständig eine Schleife ausführt und seinen Zustand beibehält, bis es zu einer Änderung in den Eingabedaten kommt.

2. Computer nach Anspruch 1,
**dadurch gekennzeichnet,**
dass er eine Schnittstelle zur Kommunikation mit der Welt außerhalb des Computers bereitstellt, wobei besagte Schnittstelle eine Anzeige des gegenwärtigen Zustands des Computers (Fig. 19) gestattet, der sich nur in Reaktion auf eine Änderung in den Informationen, die in den Computer eingespeist werden, ändert.

3. Computer nach einem der vorstehenden Ansprüche,
**dadurch gekennzeichnet,**
dass die digitalen Eingaben Subjekt-Prädikat-Aussagen über die Bezugsperson darstellen, repräsentiert als Deskriptoren mit zwei Parametern, deren Werte als eine Differenz und als ein Abstand zwischen dem kontinuierlichen Bitstrom (E3,E5,E4) und dem intermittierenden Bitstrom angegeben werden.

4. Computer nach einem oder mehreren der vorstehenden Ansprüche,
**dadurch gekennzeichnet,**
dass er einen endlichen Automaten, einen Überführungskodierer und eine Datenbank bereitstellt, wobei der endliche Automat eine endliche Anzahl von internen Zuständen und eine definierte Überführungsfunktion zwischen diesen Zuständen besitzt, so dass der endliche Automat dafür eingerichtet ist, die kombinierte Ausgabe der kontinuierlichen und intermittierenden Bitströme als Eingabe zu erhalten, dieselbe sequentiell oder parallel zu verarbeiten und an den Überführungskodierer auszugeben, der seinerseits sowohl an die besagte Datenbank als auch an besagte Eingabegeräte ausgibt.

5. Methode zur Verarbeitung und Speicherung von Informationen über eine Bezugsperson und Informationen über eine Gruppe von anderen Personen derselben Art wie die Bezugsperson, wie sie von der letzteren wahrgenommen wird, innerhalb eines Computers, um einer anderen Bezugsperson als besagtem Computer eine Darstellung des Geisteszustandes zu geben, wobei diese Methode eine Konversion von Subjekt-Prädikat-Aussagen der besagten Bezugsperson über sich selbst, wie sie zu drei verschiedenen Zeitpunkten wahrgenommen werden, sowie über die besagten anderen Personen derselben Art in digitaler Form beinhaltet, die dem Computer als Rohdaten eingegeben werden; dabei werden die Rohdaten in Form einer bipolaren Darstellung angezeigt und diese mit den Mitteln der Boolschen Kombinatorik und der Geometrie verarbeitet, um einen kontinuierlichen Bitstrom, der sich auf besagte Bezugsperson bezieht, mit einem intermittierenden Bitstrom zu kombinieren, der sich auf die besagten anderen Personen bezieht; in der geometrischen Berechnung werden die drei Zeitpunkte (ABC) als ein Basisdreieck von Vektoren in einem dreidimensionalen Koordinatenraum und die anderen Personen (D1-D17) als Punkte jeweils mit ihrem Abstand zu besagtem Basisdreieck dargestellt , so dass jeweils Tetraeder mit besagtem gemeinsamen Basisdreieck entstehen (Fig. la); das Ergebnis der geometrischen Berechnung wird ausgegeben, um eine Strukturanalyse des Tetraeders zu gestatten, und schließlich wird sowohl das Ergebnis der Anwendung der Boolschen Kombinatorik als auch das der geometrischen Strukturanalyse an Datenbanken und Anzeigegeräte des Computers als eine Darstellung des gegenwärtigen inneren Zustandes des Computers ausgegeben; die Ausgabe der Datenbank erfolgt wiederum auf die Eingabegeräte des Computers, so dass der letztere beständig eine Schleife ausführt und seinen inneren Zustand nur als Reaktion auf eine Veränderung der Eingabe ändert.

6. Methode nach Anspruch 5,
**dadurch gekennzeichnet,**
dass ein endlicher Automat und ein Überführungskodierer zur Konvertierung der kombinierten Ergebnisse der Verfahren aus der Boolschen Kombinatorik und der Geometrie in einen Nachfolgezustand benutzt wird, der dann zur Eingabe in die Datenbank und die Eingabegeräte dient.

**Revendications**

1. Ordinateur électronique pour le traitement et la mémorisation d'informations concernant l'entité d'un référent et d'informations concernant une pluralité d'autres entités, du même type que l'entité du référent, telles qu'elles sont perçues par cette dernière, **caractérisé en ce que** lesdites informations sont délivrées à l'ordinateur, à des moyens d'entrée de celui-ci, en tant qu'entrées numériques séparées, les informations concernant l'entité du référent (E3E5E4) représentent des perceptions de lui-même par l'entité du référent en trois points différents dans le temps (ABC), l'ordinateur est conçu pour traiter lesdites entrées séparément par calcul booléen et géométrique afin de combiner une suite continue de bits (E3, E5, E4) relatifs à ladite entité du référent et une suite intermittente de bits (D1-D17) relatifs auxdites autres entités, dans le calcul géométrique lesdites informations concernant l'entité du référent sont traitées en tant que triangle de base de vecteurs (ABC) dans un espace à coordonnées tridimensionnelles et lesdites informations concernant lesdites autres entités sont traitées en tant que points respectifs (D1-D17) ayant des distances respectives à partir du plan dudit triangle de base, l'ordinateur est conçu pour construire, à partir de chacun desdits points (D1-D17) et du même triangle de base (ABC), une figure respective en tétraèdre pour visualisation (figure 1b et 18), et des moyens pour combiner les suites continue et intermittente et pour délivrer celles-ci auxdits moyens d'entrée grâce à quoi l'ordinateur fonctionne continuellement en boucle fermée dans un état qui reste inchangé jusqu'à ce que se produise un changement dans une entrée.

2. Ordinateur selon la revendication 1, **caractérisé en ce que** sont prévus des moyens fournissant une interface avec le monde extérieur à l'ordinateur, ladite interface fournissant une visualisation de l'état courant de l'ordinateur (figure 19) qui change seulement en réponse à un changement des informations délivrées à l'ordinateur.

3. Ordinateur selon l'une ou l'autre des revendications précédentes, **caractérisé en ce que** les entrées numériques sont des propositions de prédicat de sujet de l'entité du référent représentées par des descripteurs à deux valeurs, dont les valeurs sont représentées par une différence et une distance entre la suite continue (E3, E4, E5) et la suite intermittente (D1-D17) de bits.

4. Ordinateur selon l'une quelconque des revendications précédentes, **caractérisé en ce que** sont prévus un automate à nombre fini d'états, un codeur d'état suivant et une base de données, l'automate à nombre fini d'états ayant un nombre fini d'états internes et des transitions définies entre lesdits états, l'automate à nombre fini d'états étant conçu pour recevoir les sorties combinées des suites continue et intermittente et pour traiter celles-ci, de manière séquentielle ou par traitement en parallèle, afin de délivrer une sortie au codeur d'état suivant, le codeur d'état suivant délivrant des sorties à la fois à ladite base de données et auxdits moyens d'entrée.

5. Méthode de traitement et de mémorisation dans un ordinateur d'informations concernant l'entité d'un référent et d'informations concernant une pluralité d'autres entités, du même type que l'entité du référent, telles qu'elles sont perçues par cette dernière, afin de délivrer à l'entité d'un référent autre que ledit ordinateur une représentation de sa propre identité, **caractérisée en ce qu'**elle comporte les étapes consistant à :

   convertir, dans les entrées numériques de l'ordinateur en tant que données brutes, des propositions de prédicat de sujet, de ladite entité du référent concernant elle-même, telle qu'elle se perçoit en trois points différents dans le temps (ABC), et desdites autres entités du même type que l'entité du référent,
   coder les données brutes en tant que représentation bipolaire,
   soumettre la représentation bipolaire à une analyse combinatoire booléenne et à une analyse géométrique afin de combiner une suite continue de bits relatifs à ladite entité de référence et une suite intermittente de bits relatifs auxdites autres entités, dans l'analyse géométrique, les trois points dans le temps (ABC) étant représentés en tant que triangle de base de vecteurs dans un espace à coordonnées tridimensionnelles et les autres entités (D1-D17) étant représentées par des points ayant des distances respectives à partir dudit triangle de base pour fournir des tétraèdres respectifs ayant ledit triangle de base en commun (figure 1a),
   délivrer en sortie l'analyse géométrique pour fournir une analyse structurelle des tétraèdres,
   délivrer en sortie les analyses structurelles booléennes et géométriques à une base de données et aux moyens de visualisation de l'ordinateur en tant que représentation de la structure de l'état interne courant de l'ordinateur, et
   délivrer en sortie la base de données aux moyens d'entrée de l'ordinateur, grâce à quoi ce dernier fonctionne en boucle fermée, son état interne changeant seulement en réponse à un changement d'une entrée.

6. Méthode selon la revendication 5, **caractérisée en ce qu'**un automate à nombre fini d'états et un codeur d'état suivant sont utilisés pour convertir les analyses structurelles et booléennes combinées en une entrée d'état suivant de la base de données et des moyens d'entrée.

EP 0 809 191 B1

• = D1-D17

Fig. 1a

Fig. 1b

Fig. 2

EP 0 809 191 B1

Fig. 3

| P | E 3 | | E 5 | | E 4 | | D 1 | |
|---|---|---|---|---|---|---|---|---|
| | L | R | L | R | L | R | L | R |
| 1 | | 1 | | 1 | 1 | | 1 | |
| 2 | | 1 | | 1 | | 1 | | 1 |
| 3 | 1 | | 1 | | 1 | | | 1 |
| 4 | | 1 | | 1 | 1 | | | 1 |
| - | - | - | - | - | - | - | - | - |
| - | - | - | - | - | - | - | - | - |
| - | - | - | - | - | - | - | - | - |
| 16 | | 1 | 1 | | 1 | | | 1 |

Fig. 4

EP 0 809 191 B1

1 | E 3 | → ← | D 1 | 2

CO

3

Fig. 5

EP 0 809 191 B1

| E 3 | | D 1 | | C O |
|---|---|---|---|---|
| L | R | L | R | |
| 1 | | 1 | | 1 |
| | 1 | 1 | | 0 |
| 1 | | | 1 | 0 |
| | 0 | | 0 | 1 |

Fig. 6

E 3-H

D 1-H

Fig. 7

EP 0 809 191 B1

| Pr | E 3 | | E 5 | | E 4 | |
|---|---|---|---|---|---|---|
| 1 | 0<br>0 | 1<br>0 | 0<br>0 | 1<br>0 | 0<br>1 | 0<br>0 |
| 2 | 0<br>0 | 1<br>0 | 0<br>0 | 1<br>0 | 0<br>0 | 1<br>0 |
| 3 | 0<br>1 | 0<br>0 | 0<br>1 | 0<br>0 | 0<br>1 | 0<br>0 |
| 4 | 0<br>0 | 1<br>0 | 0<br>0 | 1<br>0 | 0<br>1 | 0<br>0 |
| 5 | 0<br>0 | 1<br>0 | 0<br>0 | 1<br>0 | 0<br>1 | 0<br>0 |
| 6 | -<br>- | -<br>- | -<br>- | -<br>- | -<br>- | -<br>- |
| 7 | -<br>- | -<br>- | -<br>- | -<br>- | -<br>- | -<br>- |
| 8 | -<br>- | -<br>- | -<br>- | -<br>- | -<br>- | -<br>- |
| 9 | -<br>- | -<br>- | -<br>- | -<br>- | -<br>- | -<br>- |
| 10 | -<br>- | -<br>- | -<br>- | -<br>- | -<br>- | -<br>- |
| 11 | -<br>- | -<br>- | -<br>- | -<br>- | -<br>- | -<br>- |
| 12 | -<br>- | -<br>- | -<br>- | -<br>- | -<br>- | -<br>- |
| 13 | -<br>- | -<br>- | -<br>- | -<br>- | -<br>- | -<br>- |
| 14 | -<br>- | -<br>- | -<br>- | -<br>- | -<br>- | -<br>- |
| 15 | 0<br>0 | 1<br>0 | 0<br>0 | 1<br>0 | 0<br>1 | 0<br>0 |
| 16 | 0<br>0 | 1<br>0 | 0<br>1 | 0<br>0 | 0<br>1 | 0<br>0 |

Fig. 8

EP 0 809 191 B1

EP 0 809 191 B1

## Fig. 9

| Pr. | Bits | | | | E 3 | E 5 | E 4 |
|---|---|---|---|---|---|---|---|
| | $S_3$ | $S_2$ | $S_1$ | $S_0$ | | | |
| 0 | 0 | 0 | 0 | 0 | 0 | 0 | 1 |
| 1 | 0 | 0 | 0 | 1 | 0 | 0 | 0 |
| 2 | 0 | 0 | 1 | 0 | 1 | 1 | 1 |
| 3 | 0 | 0 | 1 | 1 | 0 | 0 | 1 |
| 4 | 0 | 1 | 0 | 0 | 0 | 0 | 1 |
| 5 | 0 | 1 | 0 | 1 | 1 | 0 | 0 |
| 6 | - | - | - | - | - | - | - |
| 7 | - | - | - | - | - | - | - |
| 8 | - | - | - | - | - | - | - |
| 9 | - | - | - | - | - | - | - |
| 10 | - | - | - | - | - | - | - |
| 11 | - | - | - | - | - | - | - |
| 12 | - | - | - | - | - | - | - |
| 13 | - | - | - | - | - | - | - |
| 14 | 1 | 1 | 1 | 0 | 0 | 0 | 1 |
| 15 | 1 | 1 | 1 | 1 | 0 | 1 | 1 |

( 1 )          ( 2 )          ( 3 )

S 3 ——————                —————— E 3

S 2 ——————                —————— E 5

S 1 ——————

S 0 ——————                —————— E 4

## Fig. 10

Fig. 11a

S 3 -H

S 2 -L

(S 3.$\overline{S 2}$ - L)

S 3 -H

S 1 -H

S 0 -L

($\overline{S}$ 3.S 1.$\overline{S}$ 0) -L

S 3 -L

S 2 -H

S 0 -H

(S 3.S 2.S 0) -L

S 3 -H

S 1 -H

S 0 -H

(S 3.S 1.S 0) - L)

E 3 - H

EP 0 809 191 B1

Fig. 11b

EP 0 809 191 B1

EP 0 809 191 B1

S 1 -L

S 0 -L

$(\overline{S\,1}.\overline{S\,0})$ -L

S 3 -H

S 2 -H

(S 3.S 2) - L

S 3 -L

S 2 -L

S 1 -H

$(\overline{S\,3}.\overline{S\,2}.S\,1)$ -L

S 3 -H

S 1 -H

S 0 -H

(S 3.S 1.S 0) - L

E 4 - H

Fig. 11c

Fig. 12

EP 0 809 191 B1

Fig. 13

Fig. 14

Fig. 15

EP 0 809 191 B1

Fig. 16

EP 0 809 191 B1

0 | 1 | 1 | 1 | 1 | 1 | 0 | 0 | 1 | 1 | 0 | 0 | 1 | 1 | 0 | 0

A     B     C     D     E

Fig. 17

Fig. 18

Fig. 19